(19) Europäisches Patentamt
European Patent Office
Office européen des brevets

(11) Veröffentlichungsnummer : **0 106 249**
**B1**

(12) # EUROPÄISCHE PATENTSCHRIFT

(45) Veröffentlichungstag der Patentschrift : **12.02.86**

(21) Anmeldenummer : **83109842.1**

(22) Anmeldetag : **01.10.83**

(51) Int. Cl.⁴ : **F 16 F 1/18**, B 60 G 11/02, B 32 B 17/04

(54) **Kunststoff-Blattfeder sowie Verfahren zu deren Herstellung.**

(30) Priorität : **01.10.82 AT 3633/82**
**14.04.83 AT 1327/83**

(43) Veröffentlichungstag der Anmeldung : **25.04.84 Patentblatt 84/17**

(45) Bekanntmachung des Hinweises auf die Patenterteilung : **12.02.86 Patentblatt 86/07**

(84) Benannte Vertragsstaaten :
**AT BE CH DE FR GB IT LI LU NL SE**

(56) Entgegenhaltungen :
**EP-A- 0 005 916**
**EP-A- 0 040 531**
**EP-A- 0 084 101**
**DE-A- 2 731 577**
**US-A- 3 142 598**
**US-A- 3 530 212**
**US-A- 3 567 543**
**US-A- 3 900 357**
**PATENTS ABSTRACTS OF JAPAN, Band 6, Nr. 29, 20. Februar 1982, Seite 907 M 113**
**THE ENGINEERS' DIGEST, Band 20, Nr. 12, Dezember 1959, Seite 473, London, GB, "Leaf springs of *glass-reinforced plastic*"**
**PATENTS ABSTRACTS OF JAPAN, Band 3, Nr. 45 (M-56), 17. April 1979, Seite 23 M 56**
**PATENTS ABSTRACTS OF JAPAN, Band 6, Nr. 23, 10. Februar 1982, Seite 81 M 111**
**PATENTS ABSTRACTS OF JAPAN, Band 4, Nr. 96, 11. Juli 1980, Seite 105 M 20**
**PATENTS ABSTRACTS OF JAPAN, Band 3, Nr. 105, 5. September 1979, Seite 57 M 71**

(73) Patentinhaber : **ISOSPORT VERBUNDBAUTEILE Ges.m.b.H.**
**Industriestrasse 2**
**A-7000 Eisenstadt (AT)**

(72) Erfinder : **Woltron, Herbert**
**Bahnstrasse 14/79**
**A-7000 Eisenstadt (AT)**

(74) Vertreter : **Stampfer, Heinz**
**ISOVOLTA Österreichische Isolierstoffwerke AG**
**Industriezentrum-Süd**
**A-2351 Wiener Neudorf (AT)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**EP 0 106 249 B1**

Jouve, 18, rue St-Denis, 75001 Paris, France

**Beschreibung**

Die Erfindung betrifft eine Blattfeder, die in ihrem federelastischen Bereich praktisch ausschließlich aus einer großen Mehrzahl von sehr dünnen miteinander verbundenen Laminaten aus einem faserverstärkten ausgehärteten duromeren Kunststoff besteht, in welchen hochfeste, gegebenenfalls aus Glasfasern, Kohlenstoffasern oder anderen geeigneten Fasern bestehende Verstärkungsfasern zumindest annähernd in Richtung der bei Federbelastung auftretenden maximalen Dehnungen des Fasermaterials verlaufen, und die insbesondere geeignet ist, die im Kraftfahrzeugbau üblichen Stahlblattfedern zu ersetzen. Die Erfindung betrifft ferner ein vorteilhaftes Verfahren zur Herstellung einer Kunststoffblattfeder, insbesondere der erfindungsgemäßen Kunststoffblattfeder.

Federn dieser Art sind schon seit vielen Jahren bekannt, haben aber bis jetzt im Kraftfahrzeugbau keinen nennenswerten Eingang gefunden. In der US-A-3 900 357, die auf eine Patentanmeldung aus dem Jahre 1972 zurückgeht, wird z. B. ein Verfahren zur Herstellung von Glasfaser-Kunstharzfedern beschrieben, bei welchem man von einer Folie ausgeht, die aus ungewebtem Glasfasermaterial und einem ungehärteten Matrixharz auf Epoxydharzbasis besteht. Zuschnitte aus einer solchen Folie werden in mehreren Lagen übereinander in eine Form eingelegt und unter Druck und bei erhöhter Temperatur unter Aushärtung des Matrixharzes zur fertigen Blattfeder verbunden. Da jede der übereinander angeordneten Folienlagen nur mit etwa 0,01 Zoll zur Federdicke beiträgt, sind z. B. bei einer Federdicke von 3/4 Zoll 67 übereinanderliegende Folienlagen einzusetzen. Als Aushärtezeit für eine solche Feder werden etwa 45 min angenommen.

Bei diesem bekannten Verfahren ist durch das Einlegen der Folienlagen in die Form ein hoher Aufwand an Handarbeit erforderlich. Außerdem stehen die hohen Aushärtezeiten einer rationellen Federnherstellung im Wege.

Hier will die Erfindung Abhilfe schaffen. Die Erfindung, wie sie in den Ansprüchen gekennzeichnet ist, löst einerseits die Aufgabe, eine Kunststoffblattfeder zu schaffen, die in an sich bekannter Weise in ihren federelastischen Bereichen praktisch ausschließlich aus einer großen Mehrzahl von sehr dünnen miteinander verbundenen Laminaten aus einem faserverstärkten ausgehärteten Kunststoff besteht, in welchen hochfeste, gegebenenfalls aus Glasfasern, Kohlenstofffasern oder anderen geeigneten Fasern bestehende Verstärkungsfasern zumindest annähernd in Richtung der bei Federbelastung auftretenden maximalen Dehnungen des Federmaterials verlaufen, welche aber einen höheren Volumenanteil an Verstärkungsfasern aufweisen können sollen, als es bei den bekannten Kunststoffblattfedern möglich ist. Nach Anspruch 1 ist die erfindungsgemäße Kunststoffblattfeder dadurch gekennzeichnet, daß die genannten Laminate über Bindemittelschichten zu einem oder mehreren zum Aufbau der Blattfeder dienenden federelastischen Verbundteilen oder -bereichen oder zur Blattfeder selbst verbunden sind, wobei diese Kunststofflaminate bereits ausgehärtet waren, bevor sie miteinander verbunden wurden.

Die Erfindung, wie sie in den Ansprüchen gekennzeichnet ist, löst ferner die Aufgabe, ein Verfahren zur Herstellung einer Kunststoffblattfeder anzugeben, welches einen wesentlich geringeren Aufwand an Handarbeit und gegebenenfalls geringere Herstellungszeiten erfordert als die bekannten Verfahren zur Kunststoffblattfedernherstellung.

Aus der JP-A-5422048 ist nun eine Verbundfeder aus faserverstärktem Kunststoff bekannt, bei der ein federelastischer Kern aus faserverstärktem ausgehärtetem Kunststoff etwa in Form eines gebogenen Brettes hergestellt wird. Dieser Kern wird nun so vorgespannt, daß er eben ist, und in diesem Zustand an beiden Seiten über Bindemittelschichten mit ebenen, brettartigen und federelastischen Randteilen, die ebenfalls aus einem faserverstärkten ausgehärteten Kunststoff bestehen, durch Klebung verbunden. In der so hergestellten Verbundfeder wird ein Teil der im federelastischen Kern erzeugten Vorspannung auf die beiden federelastischen Randteile übertragen, derart, daß bei einer bestimmten Deformation der Verbundfeder unter Belastung die in den Randteilen auftretenden maximalen Dehnungen gegenüber Federn gleicher Größe reduziert sind. Die Lösung des Problems einer Reduzierung der in den Randbereichen unter Belastung auftretenden maximalen Dehnungen wird gemäß der JP-A-5422048 durch eine Verklebung von drei federelastischen Teilen erreicht ; eine Verklebung von mehr als drei ausgehärteten federelastischen Teilen, wie sie bei der erfindungsgemäßen Blattfeder realisiert ist, würde zur Lösung des genannten Problems nicht beitragen.

Im folgenden wird die Erfindung anhand der Zeichnungen, die mehrere Ausführungswege illustrieren, näher erläutert.

Die Zeichnungen zeigen jeweils im Seitenriß bzw. Schnitt :

Figur 1 einen zur Herstellung eines federelastischen Verbundteiles aufgeschichteten Laminataufbau,

Figur 2 eine Presse mit HF-Kondensatorfelderwärmung mit dem eingelegten Laminataufbau gemäß Fig. 1 als Preßgut,

Figur 3 einen aus dem Laminataufbau hergestellten federelastischen Verbundteil als Vorprodukt einer zu erzeugenden Blattfeder,

Figur 4 ein unter Verwendung des federelastischen Verbundteiles gemäß Fig. 3 hergestelltes fertiges Blattfederprofil,

Figur 5 ein an den Enden der erzeugten Blattfeder zu montierendes Federauge und

Figur 6 eine Blattfeder mit gummielastischem Kern.

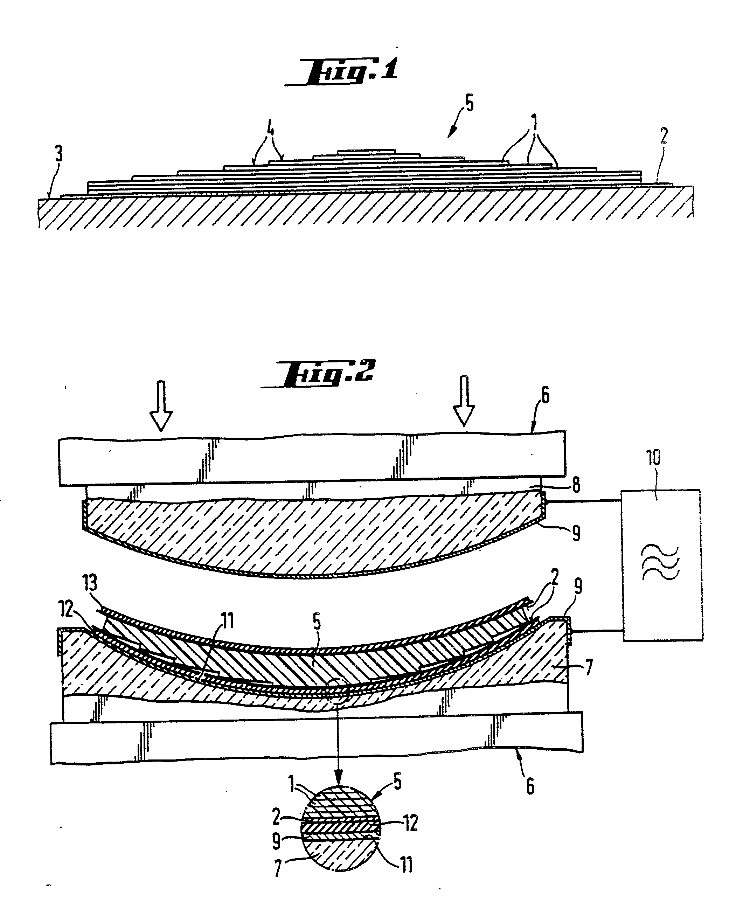

In den Figuren 1 bis 4 und 6 sind die Dicken des Laminataufbaus, des federelastischen Verbundteiles und der Blattfedern und Blattfederprofile zur besseren Übersichtlichkeit jeweils übertrieben dick dargestellt.

Figur 1 zeigt mehrere Laminatstreifen 1, die aus kontinuierlich hergestellten Epoxydharz-Glasfaserrovinglaminaten und Epoxydharz-Glasfasergewebelaminaten abgelängt sind und danach — beidseitig mit Bindemittel beschichtet — auf eine mit einer Trennschicht 2 versehene ebene Unterlage 3 zu einem als ganzes hantierbaren, an einer Oberfläche 4 abgestuften Laminataufbau 5 aufeinandergeschichtet sind.

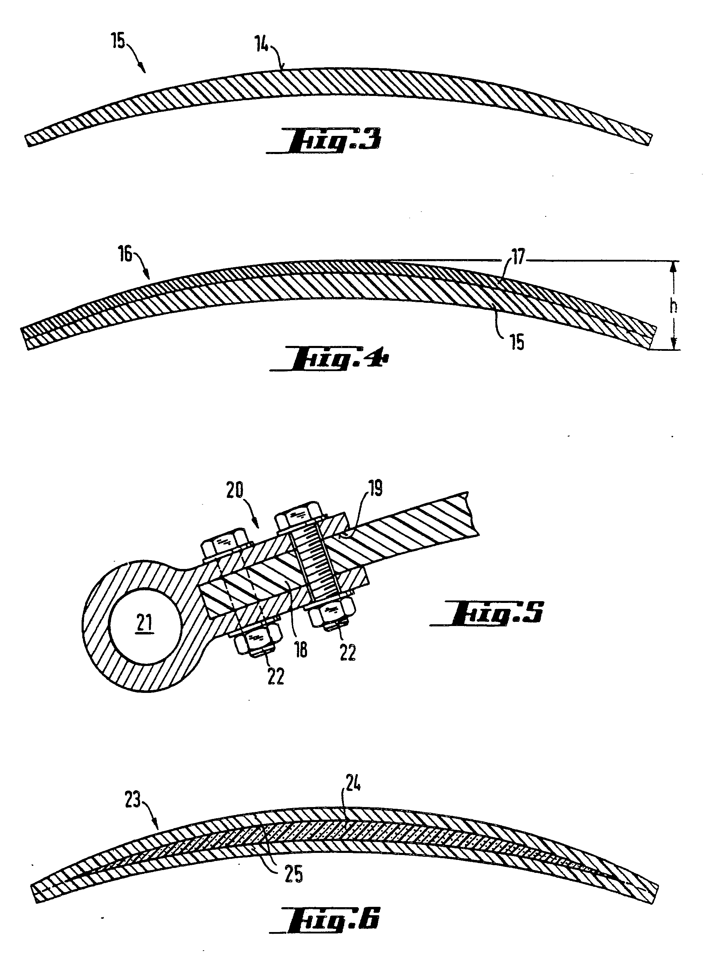

Zum Herstellen eines federelastischen Verbundteiles aus dem Laminataufbau 5 dient eine mit einer HF-Heizvorrichtung versehene Presse 6 (siehe Fig. 2) mit einer Preßform, deren Formhälften 7 und 8 elektrisch leitende Beläge 9 aufweisen, die als HF-Kondensatorfeldelektroden mit einem HF-Generator 10 verbunden sind.

Fig. 2 zeigt die Presse 6 vor dem Schließen mit dem zwischen zwei jeweils mit Trennfolien 2 abgedeckten Druckausgleichsmatten 12, 13 aus weichelastischem Material auf die untere Formhälfte 7 der Preßform aufgelegten Laminataufbau 5.

Fig. 3 zeigt einen in der Presse 6 aus dem Laminataufbau 5 hergestellten Verbundteil 15 mit bogenförmig glattgeschliffener Oberfläche 14.

In Fig. 4 ist ein Blattfederprofil 16 dargestellt, das unter Verwendung des federelastischen Verbundteiles 15 durch Anbringen eines zweiten federelastischen Verbundbereiches 17 hergestellt ist.

Fig. 5 zeigt eine vorteilhafte Art der Krafteinleitung an den Federenden 18. Dabei wird das Federende 18 in einem Schlitz 19 der Halterung 20 eines Federauges 21 durch Schrauben 22, die durch entsprechende Bohrungen im Federende 18 hindurchreichen, sowie durch Verkleben befestigt.

In Fig. 6 wird eine schematische Darstellung einer Blattfeder 23 gezeigt, die einen Kern 24 aus nicht federelastischem Material aufweist, der an seiner Ober- und Unterseite jeweils mit einem Laminatpaket verklebt ist, die federelastische Verbundbereiche 25 bilden.

Zum Aufbau der nachstehend beschriebenen Blattfedern werden glasfaserverstärkte Epoxydharzlaminate eingesetzt, die vorteilhaft in an sich bekannter Weise in einem kontinuierlichen Verfahren durch Imprägnieren eines Glasfaserrovingstranges bzw. einer bandförmigen Glasfasergewebebahn mit einem Harz-Härtergemenge, durch Kalibrieren des so erzeugten Naß-Stranges und durch anschließendes Härten bei erhöhter Temperatur erzeugt werden. Dadurch, daß bei diesem Verfahren der Glasfaserrovingstrang bzw. das Glasfasergewebe nach dem Abziehen von der Kalibriervorrichtung unter Zugspannung steht, wird in dem ausgehärteten Laminat eine mechanische Vorspannung der in Laminatlängsrichtung verlaufenden Verstärkungsfasern erzielt. Das zum Einsatz gelangende Harz-Härtergemenge besteht z. B. aus einem Epoxydharz auf Basis von Bisphenol A und einem cycloaliphatischen diaminischen Härter. Der Harzgehalt der Laminate beträgt etwa 25 Gew.% (Feststoff), was einem Volumenanteil von etwa 41 % entspricht. Zur Verbesserung der Verklebbarkeit wird das erzeugte Laminatband beidseitig geschliffen.

Bei den nachstehend beschriebenen erfindungsgemäßen Blattfedern werden Glasfaserrovinglaminate einer Dicke von 1,0 mm und Glasfasergewebelaminate einer Dicke von 0,4 mm eingesetzt, wobei letztere zur Erreichung einer ausreichenden Querzugfestigkeit der herzustellenden Blattfedern dienen. Anhand der Figuren 1 bis 4 sei nun ein vorteilhafter Ausführungsweg zur Herstellung der erfindungsgemäßen Blattfeder beschrieben, welcher aus Laminatstreifen unterschiedlicher Länge aufgebaut ist.

Die zum Einsatz gelangenden Glasfaserrovinglaminate und Glasfasergewebelaminate, die bei dem zu beschreibenden Produktionsbeispiel eine Breite von jeweils 195 mm aufweisen, werden als Endloslaminate auf Rollen aufgewickelt bereitgestellt und die benötigten Laminatstreifen in der Reihenfolge, wie sie anschließend bei der Blattfedernherstellung zum Einsatz gelangen, von den Rollen abgezogen und in den benötigten unterschiedlichen Längen abgetrennt.

Diese Laminatstreifen durchlaufen dann nacheinander eine Leimauftragsmaschine, in welcher sie beidseitig mit einem Bindemittelauftrag von jeweils 80 g/m$^2$ (Feststoff) versehen werden ; das eingesetzte Bindemittel ist dabei ein Harz-Härtergemenge von derselben Zusammensetzung, wie es bei der Herstellung der Laminate verwendet wurde.

Zur Herstellung des Laminataufbaus (Fig. 1) werden bei dem nun zu beschreibenden konkreten Beispiel auf die mit einer Trennschicht 2 versehenen ebenen Unterlage 3 — von unten nach oben — zunächst vier Rovinglaminate, ein Gewebelaminat und weitere vier Rovinglaminate von jeweils 1 550 mm Länge und danach 19 Laminate in Längen von 1 200 bis 200 mm abnehmend aufeinander gelegt, wobei bei letzteren jeweils nach einem Gewebelaminat sechs oder sieben Rovinglaminate folgen. Die so aufeinanderliegenden aneinander haftenden Laminate bilden dabei einen als ganzes hantierbaren, an einer Oberfläche 4 abgestuften Laminataufbau 5.

Als Vorbereitung für den Preßvorgang wird die konkave Preßfläche 11 (siehe Fig. 2) der unteren Formhälfte 7 mit einer Druckausgleichsmatte 12 aus weichelastischem Material und einer daran anschließenden Trennfolie 2 abgedeckt. Darauf wird nun der Laminataufbau 5 mit seiner abgestuften Oberfläche 4 nach unten aufgelegt. Wegen der hohen Flexibilität der Laminatstreifen 1 verformt sich der Laminataufbau 5 dabei als ganzes und schmiegt sich an die Trennfolie 2 an. Der Laminataufbau 5 wird dann an seiner glatten Oberfläche mit einer weiteren Trennfolie 2 gefolgt von einer weiteren Druckausgleichsmatte 13, abgedeckt. Fig. 2 zeigt diese Phase des Herstellungsvorganges.

Für den Heißpreßvorgang wird nun die Form durch Absenken der oberen Formhälfte 8 geschlossen, wobei auf das Preßgut ein Preßdruck von etwa 40 N/cm$^2$ aufgebracht und der HF-Generator 10, der mit z. B. einer Frequenz von 27,12 MHz arbeitet, eingeschaltet wird. Im elektromagnetischen HF-Feld nehmen nun sowohl das Material der ausgehärteten Laminatstreifen 1 als auch die Bindemittelschichten HF-Verlustwärme auf, wodurch der Laminataufbau 5 rasch und gleichmäßig erwärmt wird. Nach Erreichen einer Preßguttemperatur von 140 °C wird die HF-Energiezufuhr gestoppt oder so weit gedrosselt, daß diese Temperatur während der restlichen Preßzeit im wesentlichen beibehalten wird. Dabei ergibt sich als wichtiger Vorteil, daß, wegen des relativ geringen Anteils an nicht ausgehärteten, also noch reaktiven Kunstharzen an der Gesamtkunstharzmasse des Preßgutes, welcher Anteil sich ja auf das Bindemittel beschränkt, schwer kontrollierbare örtliche Temperaturerhöhungen, die von der an sich exotherm verlaufenden Härtungsreaktion herrühren könnten, nicht zu befürchten sind.

Während des Preßvorganges wird das Bindemittel in den Klebefugen des Laminataufbaus 5 bei der Preßtemperatur von 140 °C relativ dünnflüssig, sodaß es unter der Wirkung des aufgebrachten Preßdruckes gut verfließt. Das überschüssige Bindemittel wird dabei seitlich aus den Klebefugen herausgequetscht und mit ihm gegebenenfalls innerhalb der Klebefugen vorhandene Lufteinschlüsse entfernt. Das die Klebefugen vollständig und gleichmäßig ausfüllende Bindemittel härtet anschließend rasch aus, wodurch der Laminataufbau 5 in einen federelastischen Verbundteil übergeführt wird. Nach Ablauf der Preßzeit, die bei dem gegebenen Beispiel 5 min beträgt, wird die Preßform geöffnet und der Verbundteil noch heiß entnommen, abkühlen gelassen und dann an seiner durch die unterschiedlich langen Laminatstreifen 1 bedingten gestuften Oberfläche zur Bildung einer glatten Oberfläche 14 mit bogenförmiger Kontur geschliffen. Der Verbundteil 15 hat dann etwa eine Form wie in Fig. 3 dargestellt.

Zur Weiterverarbeitung des so hergestellten federelastischen Verbundteiles 15 zu einem Blattfedernprofil, wird dieser in einer zweiten Verfahrensstufe an seiner konvexen, eben erst glattgeschliffenen Oberfläche 14 mit mehreren übereinander angeordneten Laminatstreifen 1 verklebt. Dazu werden vier Rovinglaminate, ein Gewebelaminat und weitere vier Rovinglaminate einer Breite von 195 mm und einer Länge von 1 560 mm, die — so wie bei der Herstellung des ersten Laminataufbaus 5 — jeweils beidseitig mit einem Bindemittelauftrag von 80 g/m$^2$ (Feststoff) versehen wurden, zur Herstellung eines zweiten Laminataufbaus auf der mit der Trennschicht 2 versehenen ebenen Unterlage 3 übereinandergeschichtet.

Dieser zweite Laminataufbau wird dann — analog wie anhand von Fig. 2 beschrieben — auf die mit Druckausgleichsmatte und Trennfolie abgedeckte konkave Preßfläche der unteren Formhälfte einer mit HF-Energie beheizten Presse aufgelegt. Der Verbundteil 15, der an seiner konvexen Oberfläche 14 ebenfalls mit Bindemittel beschichtet wurde, wird nun mit dieser Oberfläche 14 nach unten auf den bereits in die Presse 6 eingebrachten zweiten Laminataufbau aufgelegt, wobei die Verbundteiloberfläche 14 an den Laminataufbau satt anschließt. Nach Auflegen einer Trennfolie und einer weiteren Druckausgleichsmatte, wird die Form geschlossen und durch HF-Erhitzung des Preßgutes auf 140 °C bei einem Preßdruck von 40 N/cm$^2$ während einer Preßzeit von 5 min die einzelnen Preßgutkomponenten miteinander zu einem Blattfedernprofil verklebt.

Die Preßform wird dann geöffnet und das fertige in Fig. 4 gezeigte Blattfederprofil 16, das nun aus dem federelastichen Verbundteil 15 und einem zweiten federelastischen Verbundbereich 17 besteht, noch heiß entnommen. Nach Abkühlung wird das Blattfederprofil 16 durch Sägeschnitte in drei identische gebrauchsfertige Blattfedern von jeweils 60 mm Breite unterteilt.

Die Blattfeder hat in der Federmitte eine Dicke von 34 mm und an ihren Enden Dicken von 17 mm. Die Höhe h der Federmitte über den Federenden beträgt 130 mm. Sie hat eine Federrate (Federkonstante) von 60 N/mm und ist ausgelegt für eine maximale Auslenkung in Federmitte von 200 mm. Die beschriebene Blattfeder ertrug bei Dauerlastwechselversuchen mehr als die doppelte Lastwechselzahl als die, bei der in Vergleichsversuchen eine gleichartige Stahlblattfeder defekt wurde.

Die vorstehend beschriebene, durch einen zweistufigen Herstellungsprozeß erzeugte Blattfeder hat den Vorteil, daß die Randbereiche an ihrer Ober- bzw. Unterseite, die bei der Belastung der Feder verstärkt beansprucht werden, aus Laminatstreifen gebildet sind, die sich mit durchgehenden Fasern der Glasfaserarmierung über die gesamte Federlänge erstrecken.

Sollte es bei dem vorstehend beschriebenen Verfahren zweckmäßig sein, die Preßzeiten in der HF-beheizten Presse zu verkürzen, kann — in Abänderung des vorstehend beschriebenen Verfahrens — der federelastische Verbundteil oder das Blattfederprofil bereits nach einer Teilhärtung des Bindemittels der Form entnommen und erst danach in einem Ofen bei erhöhter Temperatur vollständig ausgehärtet werden.

Nach einer weiteren Variante zur Herstellung der Blattfedern wird — statt das Bindemittel mittels einer Leimauftragsmaschine aufzubringen — jeweils zwischen zwei benachbarten zu verklebenden Komponenten ein bei erhöhter Temperatur aktivierbares Klebeblatt eingefügt, das vorteilhaft ein mit einem Epoxydharz-Härtergemenge imprägniertes und getrocknetes Glasfasergewebe (Glasfaser-Prepreg) sein kann. Die Verklebung erfolgt dann jeweils vorzugsweise ebenfalls analog wie anhand von Fig. 2 beschrieben in einer Presse mit HF-Kondensatorfelderwärmung des Pressgutes. Die für die Verklebung erforderlichen Temperaturen werden bei der Verwendung solcher Klebeblätter — wegen der Hemmung des freien Fließens des Bindemittels in der Klebefuge — aber im allgemeinen höher sein als bei der Anwendung von z. B. mittels Leimauftragsmaschine auf die Laminatstreifen aufgebrachten Bindemittelschichten. Beim Einsatz solcher ein Glasfasergewebe enthaltender Klebeblätter kann der Federkörper in vielen Fällen ausschließlich aus Glasfaserrovinglaminaten aufgebaut sein, denn die Glasfasergewebe-Verstärkung in den Bindemittelfugen erzeugt meist schon eine ausreichende Querzugsfestigkeit des Federkörpers.

Die Krafteinleitung an den Federenden erfolgt bei den beschriebenen erfindungsgemäßen Blattfedern durch Federaugen, wie sie weiter oben anhand von Fig. 5 beschrieben sind.

Bei den erfindungsgemäßen Blattfedern tragen zur erzielbaren Federkraft hauptsächlich nur die in den oberen und unteren Randbereichen der Feder angeordneten Laminate bei. Außerdem sind von den Bindemittelfugen aufzunehmende Schubspannungen jeweils in der Mitte eines Federquerschnitts am größten. Diesen Tatsachen wird in einer weiteren vorteilhaften Ausführung der erfindungsgemäßen Blattfeder (siehe Fig. 6) Rechnung getragen, bei der in der Mitte der Blattfeder ein Kern aus nicht federelastischem Material angeordnet ist, welcher an seiner Ober- und Unterseite jeweils mit einem Laminat-Paket verklebt ist, die federelastische Verbundbereiche 25 bilden. Der Kern 24, der vorteilhaft aus einem faserverstärktem elastomeren oder thermoplastischem Kunststoff bestehen kann, wird gewöhnlich in einem getrennten Verfahren hergestellt, an beiden Seiten mit Bindemittel beschichtet und dann anschließend an seine Ober- und Unterseite, mit jeweils einem aus mehreren Laminaten gleicher Länge bestehenden Laminataufbau — analog wie anhand von Fig. 2 beschrieben — in einer beheizten Presse zu einer Blattfeder 23 oder einem Blattfederprofil verbunden. Dabei ist zu beachten, daß der an seinen beiden Enden keilförmig auslaufende Kern 24 nicht bis zu den Enden der Blattfeder 23 reichen sollte. Wegen der gummielastischen Verformbarkeit des Kernmaterials können sich bei der Verformung der Blattfeder 23 unter Belastung im Kern 24 keine nennenswerten Schubspannungen aufbauen.

Die erfindungsgemäßen Kunststoff-Blattfedern können in ähnlicher Weise wie die üblichen Stahlblattfedern in Kraftfahrzeugen eingesetzt werden. Gegenüber Stahlblattfedern bestehen ihre Vorteile vor allem in einem wesentlich geringeren Gewicht und darin, daß sie im Gebrauch keinerlei Korrosion unterliegen.

Die erfindungsgemäßen Kunststoff-Blattfedern können im Gegensatz zu den derzeit bekannten Kunststoff-Blattfedern mit Hilfe des erfindungsgemäßen Verfahrens auch in kleinen Serien rationell hergestellt werden.

**Patentansprüche**

1. Blattfeder, die in ihrem federelastischen Bereich praktisch ausschließlich aus einer großen Mehrzahl von sehr dünnen miteinander verbundenen Laminaten (1), aus einem faserverstärkten ausgehärteten duromeren Kunststoff besteht, in welchen hochfeste, gegebenenfalls aus Glasfasern, Kohlenstoffasern oder anderen geeigneten Fasern bestehende Verstärkungsfasern zumindest annähernd in Richtung der bei Federbelastung auftretenden maximalen Dehnungen des Federmaterials verlaufen, dadurch gekennzeichnet, daß diese Kunststofflaminate (1) über Bindemittelschichten zu einem oder mehreren zum Aufbau der Blattfeder dienenden federelastischen Verbundteilen (15) oder -bereichen (17, 25) oder zur Blattfeder selbst verbunden sind, wobei diese Kunststofflaminate (1) bereits ausgehärtet waren, bevor sie miteinander verbunden wurden.

2. Blattfeder nach Anspruch 1, dadurch gekennzeichnet, daß zumindest die Mehrzahl der zu federelastischen Verbundteilen (15) oder -bereichen (17, 25) verbundenen Kunststofflaminate jeweils einzeln eine Dicke von mindestens 0,5 mm, vorteilhaft jedoch von mindestens 0,8 mm aufweist.

3. Blattfeder nach Anspruch 1 oder 2 mit in Längsrichtung veränderlicher Dicke, dadurch gekennzeichnet, daß sie durch einen federelastischen Verbundteil (15) oder -bereich (17, 25) gebildet ist oder einen solchen enthält, in welchem Laminate (1) mit unterschiedlicher Länge miteinander verbunden sind.

4. Blattfeder nach einem der Ansprüche 1 bis 3, dadurch gekennzeichnet, daß sie zumindest einen federelastischen Verbundteil (15) oder -bereich (17, 25) umfaßt, in dem der größte Teil der Laminate (1) ausschließlich in Blattfederlängsrichtung verlaufende und gegebenenfalls unter Vorspannung stehende Verstärkungsfasern aufweist.

5. Blattfeder nach einem der Ansprüche 1 bis 4, dadurch gekennzeichnet, daß sie zumindest einen federelastischen Verbundteil (15) oder -bereich (17, 25) umfaßt, in dem ein kleinerer Teil der Laminate Verstärkungsfasern aufweist, deren Achsen mit der Blattfederlängsrichtung einen Winkel zwischen 5° und 90°, insbesondere jedoch von etwa 90° einschließen.

6. Blattfeder nach einem der Ansprüche 1 bis 5, dadurch gekennzeichnet, daß sie zwei federelastische Verbundbereiche (25) aufweist, die an zwei einander gegenüberliegenden Seiten eines Kernes (24) aus nicht federelastischem Material über Bindemittelschichten mit den beiden Seiten des Kerns verbunden sind.

7. Blattfeder nach Anspruch 6, dadurch gekennzeichnet, daß der Kern (24) zumindest zum Teil aus einem elastomeren Kunststoff besteht.

8. Blattfeder nach Anspruch 7, dadurch gekennzeichnet, daß in dem elastomeren Kunststoff des Kerns (24) ein fasriges Material eingebettet ist.

9. Blattfeder nach einem der Ansprüche 1 bis 8, gekennzeichnet durch Bindemittelschichten, die ein duromeres Bindemittel enthalten.

10. Blattfeder nach einem der Ansprüche 1 bis 9, gekennzeichnet durch Bindemittelschichten, in denen ein fasriges Material eingebettet ist.

11. Blattfeder nach einem der Ansprüche 9 oder 10, dadurch gekennzeichnet, daß das duromere Bindemittel ein Kunststoffkleber auf derselben Basis wie das Matrixharz der miteinander zu Verbundteilen (15) oder -bereichen (17, 25) oder zur Blattfeder verklebten Kunststofflaminate (1) ist.

12. Verfahren zur Herstellung einer Blattfeder, dadurch gekennzeichnet, daß zur Herstellung von faserverstärkten Kunststofflaminatstreifen (1) in einem kontinuierlichen Verfahren zunächst durch Imprägnieren eines fasrigen Trägermaterials mit einem aushärtbaren Kunstharzgemisch ein Strang geformt wird, der durch Aushärtung in ein bandförmiges Kunstharzlaminat übergeführt wird, welches gegebenenfalls geschliffen und zu Streifen (1) abgelängt wird, daß mehrere dieser Laminatstreifen (1) nach Beschichtung mit einem duromeren Bindemittel oder unter Einfügung von gegebenenfalls ein fasriges Trägermaterial und ein duromeres Bindemittel enthaltenden Klebeblättern in einer Form (7, 8) miteinander und mit den gegebenenfalls vorgesehenen weiteren Komponenten der Blattfeder unter Aktivierung und Härtung des Bindemittels zu einem zum Aufbau der Blattfeder dienenden federelastischen Verbundteil (15) oder -bereich (17, 25) oder zur Blattfeder oder einem Blattfederprofil (16) verbunden werden.

13. Verfahren nach Anspruch 12, dadurch gekennzeichnet, daß das Aktivieren und Härten des Bindemittels bei erhöhten Temperaturen, gegebenenfalls Temperaturen über 100 °C erfolgt.

14. Verfahren nach Anspruch 13, dadurch gekennzeichnet, daß das Aufheizen zum Zwecke des Aktivierens und Härtens des Bindemittels in einem elektromagnetischen Hochfrequenzfeld erfolgt.

15. Verfahren nach einem der Ansprüche 12 bis 14, dadurch gekennzeichnet, daß der federelastische Verbundteil (15) oder die Blattfeder oder das Blattfederprofil (16) bereits nach einer Teilhärtung des Bindemittels der Form entnommen und erst danach das Bindemittel bei erhöhter Temperatur vollständig ausgehärtet wird.

16. Verfahren nach einem der Ansprüche 12 bis 15, dadurch gekennzeichnet, daß zunächst durch Miteinander-Verkleben von mehreren faserverstärkten Kunststofflaminaten ein Basisfeder-Verbundteil gebildet wird, in welchem zumindest für einen Teil der Laminate (1) des Verbundteils (15) deren Längen unter Bildung einer abgestuften Oberfläche (4) abnehmen, daß diese Abstufungen zur Bildung einer bogenförmig glatten Oberfläche (14) des Basisfeder-Verbundteiles (15) durch mechanische Bearbeitung abgetragen, gegebenenfalls abgeschliffen werden und daß auf diese bogenförmig glatte Oberfläche (14) ein oder mehrere übereinander angeordnete faserverstärkte ausgehärtete Kunststofflaminate (1), die einen weiteren federelastischen Verbundbereich (17) zu bilden bestimmt sind, aufgeklebt werden.

17. Verfahren nach einem der Ansprüche 12 bis 16, dadurch gekennzeichnet, daß die hergestellten Blattfederprofile durch Sägeschnitte in einzelne Blattfedern unterteilt werden.

**Claims**

1. Leaf spring which consists, in a resilient region, virtually exclusively of a large number of very thin laminates (1), bonded to one another and consisting of a fibre-reinforced cured duroplastic, in which high-strength reinforcing fibres, which may consist of glass fibres, carbon fibres or other suitable fibres, run at least approximately in the direction of the maximum elongations of the spring material occurring under spring load, characterised in that these plastic laminates (1) are bonded together via bonding agent layers to form one or more resilient composite parts (15) or composite regions (17, 25) serving to compose the leaf spring, or to the leaf spring itself, these plastic laminates (1) having already been cured before being bonded to one another.

2. Leaf spring according to claim 1, characterised in that at least the majority of the plastic laminates bonded together to give resilient composite parts (15) or composite regions (17, 25) each individually have a thickness of at least 0.5 mm, but preferably of at least 0.8 mm.

3. Leaf spring according to claim 1 or 2, with a thickness variable in the longitudinal direction, characterised in that it is formed by a resilient composite part (15) or composite region (17, 25) or contains such a part or region, in which laminates (1) of different lengths are bonded to each other.

4. Leaf spring according to one of claims 1 to 3, characterised in that it comprises at least one resilient composite part (15) or composite region (17, 25), in which the greater part of the laminates (1) has reinforcing fibres which run exclusively in the lengthwise direction of the leaf spring and are optionally prestressed.

5. Leaf spring according to one of claims 1 to 4, characterised in that it comprises at least one resilient composite part (15) or composite region (17, 25) in which a minority of the laminates has reinforcing fibres whose axes include an angle of between 5° and 90°, but especially of about 90°, with the lengthwise direction of the leaf spring.

6. Leaf spring according to one of claims 1 to 5, characterised in that it has two resilient composite regions (25) which on two opposite sides of a core (24) of non-resilient material are bonded, via layers of bonding agent, to the two sides of the core.

7. Leaf spring according to claim 6, characterised in that the core (24) consists at least in part of an elastomeric plastic.

8. Leaf spring according to claim 7, characterised in that a fibrous material is embedded in the elastomeric plastic of the core (24).

9. Leaf spring according to one of claims 1 to 8, characterised by layers of bonding agent which contain a duroplastic bonding agent.

10. Leaf spring according to one of claims 1 to 9, characterised by layers of bonding agent in which a fibrous material is embedded.

11. Leaf spring according to one of claims 9 or 10, characterised in that the duroplastic bonding agent is a plastic adhesive based on the same materials as the matrix resin of the plastic laminates (1) which are bonded together to form composite parts (15) or composite regions (17, 25) or to form the leaf spring.

12. Process for the production of a leaf spring, characterised in that for the production of fibre-reinforced plastic laminate strips (1) in a continuous process, a strand is first formed by impregnating a fibrous carrier material with a curable synthetic resin mixture, which strand is converted, by curing, into a ribbon-shaped synthetic resin laminate which, if appropriate, is drawn and cut into lengths to give strips (1), and that a plurality of these laminate strips (1), after coating with a duroplastic bonding agent, or with insertion of adhesive sheets which optionally contain a fibrous carrier material and a duroplastic bonding agent, are bonded to one another, and to the optionally provided further components of the leaf spring, in a mould (7, 8) with activation and curing of the bonding agent, to give a resilient composite part (15) or composite region (17, 25) serving for the construction of the leaf spring, or to form the leaf spring or a leaf spring profile (16).

13. Process according to claim 12, characterised in that the activation and curing of the bonding agent is effected at elevated temperatures, where appropriate at temperatures above 100 °C.

14. Process according to claim 13, characterised in that the heating for the purpose of activating and curing the bonding agent is effected in an electromagnetic high frequency field.

15. Process according to one of claims 12 to 14, characterised in that the resilient composite part (15) or the leaf spring or the leaf spring profile (16) is removed from the mould when the bonding agent has only cured partially, and that the bonding agent is only subsequently cured fully at an elevated temperature.

16. Process according to one of claims 12 to 15, characterised in that first, by bonding together a plurality of fibre-reinforced plastic laminates, a basic spring composite part is formed, in which, at least for a part of the laminates (1) of the composite part (15), the lengths of the laminates decreased to form a stepped surface (4), that these steps are machined off, if appropriate ground off, to form an arc-shaped smooth surface (14) of the basic spring composite part (15) and that onto this arc-shaped smooth surface (14) are glued one or a plurality of superposed fibre-reinforced cured plastic laminates (1) which are intended to form a further resilient composite region (17).

17. Process according to one of claims 12 to 16, characterised in that the leaf spring profiles produced are divided into single leaf springs by saw cuts.

**Revendications**

1. Ressort à lames, qui se compose dans sa zone élastique, pratiquement exclusivement d'un grand nombre de stratifiés très minces, reliées entre eux et formés d'une matière plastique duromètre durcie et renforcée par des fibres, où sont disposées des fibres de renforcement à grande résistance, se composant le cas échéant de fibres de verre, de fibres de carbone ou d'autres fibres appropriées qui sont orientées au moins approximativement dans la direction des allongements maximaux de la matière fibreuse se produisant lors de la sollicitation du ressort, caractérisé en ce que ces stratifiés de matière plastique (1) sont reliés entre eux, par l'intermédiaire de couches de liant, de façon à former une ou plusieurs parties (15) ou zones (17, 25) composites élastiques servant à la fabrication du ressort à lames ou bien sous la forme du ressort à lames proprement dit, lesdits stratifiés de matière plastique (1) ayant déjà été durcis avant d'être reliés les uns aux autres.

2. Ressort à lames selon la revendication 1, caractérisé en ce qu'au moins la pluralité de stratifiés de matière plastique reliés sous la forme de parties (15) ou zones (17, 25) composites élastiques présentant, individuellement, une épaisseur d'au moins 0,5 mm, mais avantageusement d'au moins 0,8 mm.

3. Ressort à lames selon la revendication 1 ou 2, comportant une épaisseur variable dans une direction longitudinale, caractérisé en ce qu'il est constitué par une partie (15) ou une zone (17, 25) composite élastique ou bien contient une telle partie ou zone, dans laquelle des stratifiés (1) de différentes longueurs sont reliés entre eux.

4. Ressort à lames selon une des revendications 1 à 3, caractérisé en ce qu'il comporte au moins une partie (15) ou une zone (17, 25) composite élastique dans laquelle la majeure partie des stratifiés (1) orientés exclusivement dans la direction longitudinale du ressort à lames et comportent, le cas échéant, des fibres de renforcement soumises à une précontrainte.

5. Ressort à lames selon une des revendications 1 à 4, caractérisé en ce qu'il comporte au moins une partie (15) ou une zone (17, 25) composite élastique dans laquelle une petite partie des stratifiés comporte des fibres de renforcement dont les axes font un angle compris entre 5 et 90°, notamment cependant d'environ 90°, avec la direction longitudinale du ressort à lames.

6. Ressort à lames selon une des revendications 1 à 5, caractérisé en ce qu'il comporte deux zones composites élastiques (25) qui sont reliées, sur deux côtés mutuellement opposés d'un noyau (24) constitué d'un matériau non élastique, avec les deux côtés du noyau par l'intermédiaire de couches de liant.

7. Ressort à lames selon la revendication 6, caractérisé en ce que le noyau (24) est constitué au moins en partie d'une matière synthétique élastomère.

8. Ressort à lames selon la revendication 7, caractérisé en ce qu'une matière fibreuse est incorporée à la matière synthétique élastomère du noyau (24).

9. Ressort à lames selon une des revendications 1 à 8, caractérisé par des couches de liant qui contiennent un liant duromère.

10. Ressort à lames selon une des revendications 1 à 9, caractérisé par des couches de liant auxquelles est incorporée une matière fibreuse.

11. Ressort selon une des revendications 9 ou 10, caractérisé en ce que le liant duromère est un adhésif en matière synthétique de même nature que la résine matricielle des stratifiés de matière synthétique (1) collés entre eux sous la forme de parties (15) ou zones (17, 25) composites ou bien sous la forme d'un ressort à lames.

12. Procédé de fabrication d'un ressort à lames, caractérisé en ce que, pour la fabrication de bandes stratifiées (1) en matière synthétique renforcées par des fibres dans un processus continu, on forme initialement, par imprégnation d'une matière porteuse fibreuse avec un mélange de résine synthétique durcissable un boudin qui est transformé par durcissement en un stratifié en résine synthétique sous forme de bande qui est, le cas échéant, meulé et découpé à longueur en bandes (1), en ce que plusieurs de ces bandes de stratifié (1), après revêtement avec un liant duromère ou bien avec interposition de feuilles adhésives contenant, le cas échéant, une matière porteuse fibreuse et un liant duromère, sont disposées dans un moule (7, 8) et sont reliées entre elles et avec les autres composants, prévus le cas échéant, du ressort à lames, avec activation et durcissement du liant, pour former une partie (15) ou zone (17, 25) composite élastique servant à la fabrication du ressort à lames, ou bien le ressort à lames proprement dit, ou bien un profil de ressort à lames (16).

13. Procédé selon la revendication 12, caractérisé en ce que l'activation et le durcissement du liant sont effectués à des températures élevées, le cas échéant, à des températures supérieures à 100 °C.

14. Procédé selon la revendication 13, caractérisé en ce que le chauffage effectué pour l'activation et le durcissement du liant est réalisé dans un champ électromagnétique à haute fréquence.

15. Procédé selon l'une des revendications 12 à 14, caractérisé en ce que la partie composite élastique (15) ou le ressort à lames ou bien le profil de ressort à lames (16) sont enlevés du moule aussitôt après un durcissement partiel du liant et ensuite le liant est complètement durci à une température plus élevée.

16. Procédé selon l'une des revendications 12 à 15, caractérisé en ce qu'initialement, en collant ensemble plusieurs stratifiés de matière synthétique renforcés par des fibres, on forme une partie composite correspondant au ressort de base, en ce qu'au moins pour une partie des stratifiés (1) de la partie composite (15), leur longueur diminue en formant une surface supérieure étagée (4), en ce que ces parties étagées servant à former une surface supérieure lisse incurvée (14) dans la partie composite (15) du ressort de base sont enlevées par usinage mécanique, le cas échéant par meulage, et en ce qu'on colle sur cette surface lisse (14) de profil incurvé un ou plusieurs stratifiés de matière synthétique superposés, durcis et renforcés par des fibres (1) qui sont conçus pour former une autre zone composite élastique (17).

17. Procédé selon l'une des revendications 12 à 16, caractérisé en ce que les profils de ressort à lames fabriqués sont sectionnés par des traits de scie en ressorts à lames individuels.

Fig. 1
5
4
1
3
2

Fig. 2
6
8
9
10
13
2
9
12
11
5
7
6
1
5
2
12
9
7
11

15
14

Fig. 3

16
17
h
15

Fig. 4

20
19
21
18
22
22

Fig. 5

23
24
25

Fig. 6